# EUROPEAN PATENT APPLICATION

(11) **EP 2 365 299 A1**
(43) Date of publication of application: **14.09.2011**
(21) Application number: 10425046.9
(22) Date of filing: 23.02.2010
(51) Int. Cl.: G01F 15/14, G01F 15/18

(54) **Fluid meter comprising a detachable electronic module**

(71) Applicant: B Meters S.r.L., 33050 Gonars (UD) (IT)
(72) Inventor: Budai, Mauro, 33050 Bagnaria Arsa Udine (IT); Conchione, Emerson, 33050 Gonars Udine (IT)
(74) Representative: Giugni, Valter

(57) **Abstract**

The present invention refers to a meter (1) for fluids including a body (2) on which may be reversibly coupled a capsule (3) containing an electronic module (29) used to record, process and send data relative to said fluids and to the state of the meter itself, characterized in that the body (2) and the capsule (3) are coupled by means of first (15) and second (23) elements of bayonet-joint type.

## Description

### FIELD OF INVENTION

The present invention refers to a fluid flowmeter to apply along the path of a fluid to measure the flow rate and, in particular, a water meter of the type including a detachable electronic module used to collect, manage and send data about said flow and about the state of the same meter.

### BACKGROUND OF THE INVENTION

The reading of the consumption of fluids such as gas and water or electrical energy is performed in a conventional manner through operators of the different utility companies, who directly inspect the meters in residential or industrial buildings at scheduled time intervals. However, this reading may sometimes be difficult due to a number or reasons. Firstly, especially in residential buildings, it is not always possible to find the persons that allow access to the meters in the course of the day due to working or personal engagements. In addition, the meters may be positioned in dark and cramped places, and therefore difficult to reach to carry out the reading. It should also be noted that unfortunately it is not uncommon for people to fall prey to subterfuges from false operators who, with the excuse of needing to open the door to allow them access to the meters, enter into private homes, commonly where elderly people live, and with the help of an accomplice distract them while perpetrating thefts of money and valuables. As a consequence, elderly people are generally reluctant to open their door to strangers.

For all these reasons, the current tendency is to carry out a remote reading of the meters. For this purpose, the new generation meters are of electronic type and, in particular, they are provided with devices for radio connections or connections through telephone lines or other types of cabling. These connections require a complex structure, since they could include electronic sources of energy, cabling and modules, such as printed boards and circuits. All of this must be suitably housed in the mechanical part of the meter and functionally coupled to it.

In particular, the electronic modules may be prearranged to carry out the reading according to two different modes: direct-light reading and reflected-light reading. The direct-light reading consists of prearranging a light beam emitter in a position diametrically opposite to a receiver of said beam with respect to a cylinder or a rotor that rotates on its axis and is connected to the gears of the meter. The cylinder is provided with two opposite walls separated by corresponding apertures in such a manner that the light emitter and the receiver are alternately facing each other or repetitively hidden from each other when the cylinder is in rotation. The reflected-light reading, on the other hand, involves casting a beam of light at right angles on a disk, integral with the gears of the meter, provided with a surface that reflects the beam in a manner that can be picked up by the receiver.

In the case of direct-light reading, it is evident that the rotating cylinder takes up a certain volume and can be housed directly in the body of the meter or placed so as to project from said body and allow the interaction with the emitter and the receiver positioned externally to the meter in an appropriate electronic module. In this case, the electronic module must be firmly fastened to the meter in a functional and dirt-tight and watertight manner.

### SUMMARY OF THE INVENTION

The technical problem at the basis of the present invention is therefore to provide a direct-light or a reflected-light meter comprising a data collecting, processing and forwarding electronic module, applicable to the body of the meter in a simple, effective and fluid-tight manner.

This problem is solved by a direct-light or a reflected-light meter comprising a system for coupling the body of the meter and the electronic module to each other and having characteristics such as to resolve the above problem.

### BRIEF DESCRIPTION OF THE DRAWINGS

Further characteristics and advantages of the direct-light meter of the invention will become more evident from the following description of an embodiment given purely by way of non-limiting example with reference to the following figures, wherein:
- Figure 1A is a perspective view from above of a meter with an electronic module support capsule not assembled on the meter;
- Figure 1B shows a detail of Figure 1A;
- Figure 2 is a perspective view from below of the capsule of Figure 1 A;
- Figure 3 is a perspective view from above of the assembled meter and capsule of Figure 1A;

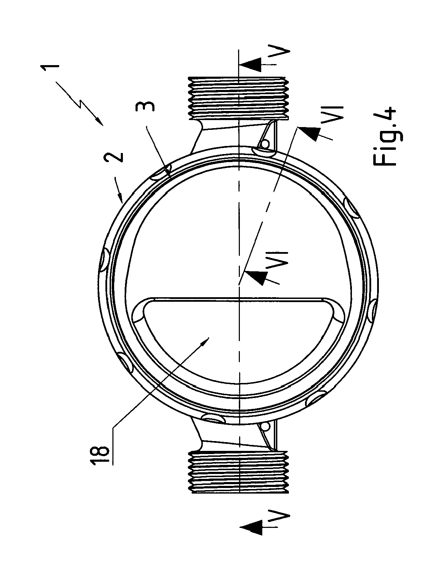

- Figure 4 is a plan view from above of the meter of Figure 3;
- Figure 5 is a side view in partial cross section along the line V-V of the meter of Figure 4;
- Figure 6 is a side view in partial cross section along the line VI-VI of the meter of Figure 4.

### DETAILED DESCRIPTION OF THE INVENTION

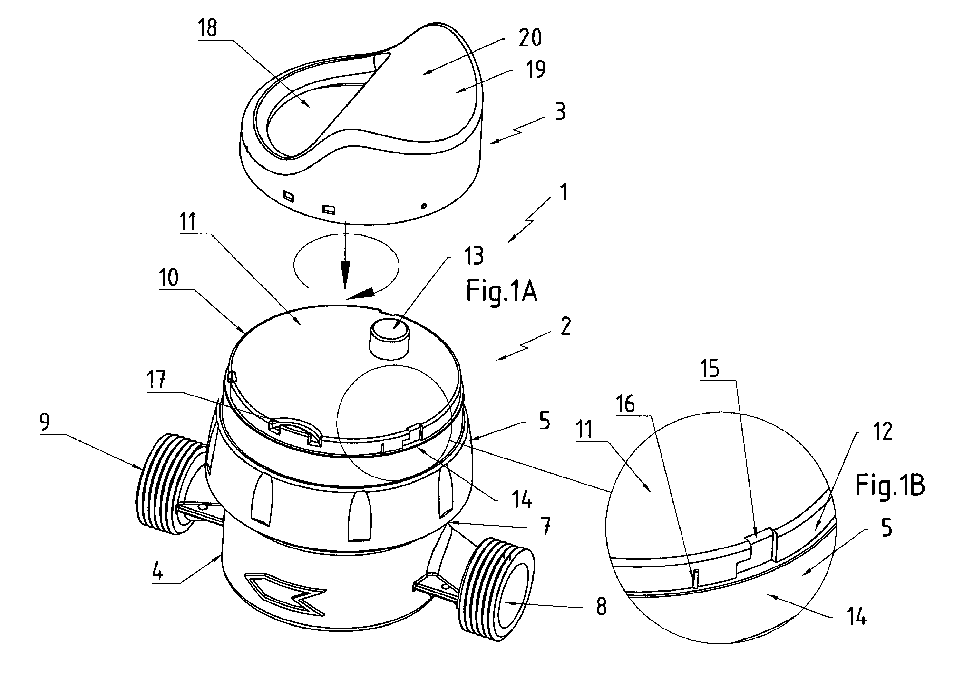

With reference to Figure 1, reference numeral 1 indicates a fluid meter as a whole. The meter 1 includes a body 2 to which can be coupled a capsule 3 of an electronic module.

The body 2 is preferably the body of a water meter having a generally cylindrical shape with a first portion 4 and a second portion 5. The first portion 4 is typically crossed by a duct 7 provided with a threaded and diametrically opposite fluid inlet 8 and outlet 9 projecting from the wall of the first portion. In addition, said duct is intercepted internally by a turbine (not shown) driven by the flow of fluid passing through it.

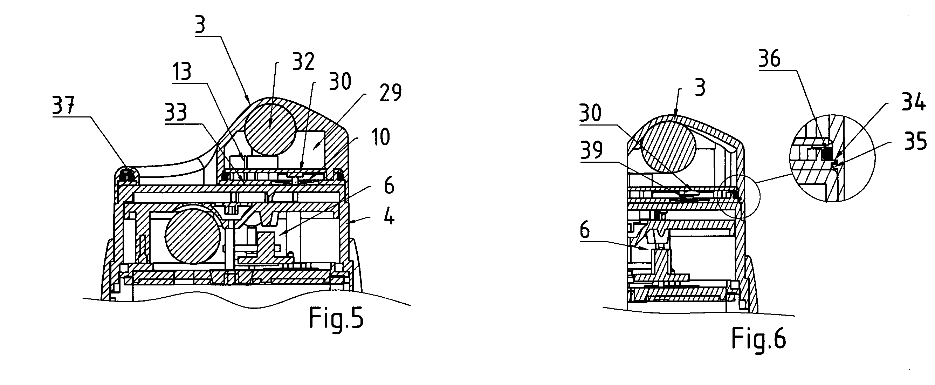

The second portion 5, as shown in the cross sections of Figures 5 and 6, encloses a system 6 for transmitting the movement of said turbine to known numerical indicators or pointers (also not shown) by means of a geared shaft that meshes with a plurality of gearwheels which are in turn connected to said indicators or pointers in a completely conventional manner.

The second portion 5 also includes a transparent capsule 10 suitable to protect the indicators, the pointers and a rotor of the direct-light reading system allowing, at the same time, the control and the reading of these components.

Advantageously, the capsule 10 includes a bottom portion 11, generally flat and disk-shaped, from the periphery of which extends a border 12 (better shown in Figure 1 B) forming an annular band integral with said second portion 5. In addition, from the bottom 11 rises a cylindrical seat 13 suitable to receive a rotor of a direct-light reading device.

The border 12 has first elements 14 of bayonet-joint type that dovetail with respective second bayonet-joint type elements arranged on the capsule 3 of the electronic module, as will be explained later. Preferably, said first elements 14 include a plurality of slots 15 having generally an L shape, with a first portion extending vertically to cover substantially all the height of the border 12 and a second portion that extends horizontally. In particular, there are three of said first elements 14 equidistant on said border 12.

Moving clockwise, after each slot 15 there are first safety elements 16 suitable to engage reversibly with corresponding second safety elements formed on the capsule 3 of the electronic module, as described later. Preferably, said first safety elements are represented by a spline or rib.

The border 12 may, in addition, include an area crossed by an incision 17 in the shape of a circular arc that extends toward the centre of the bottom portion 11 of the capsule 10. This incision, as will be explained in detail later, allows the application of an anti-tampering seal.

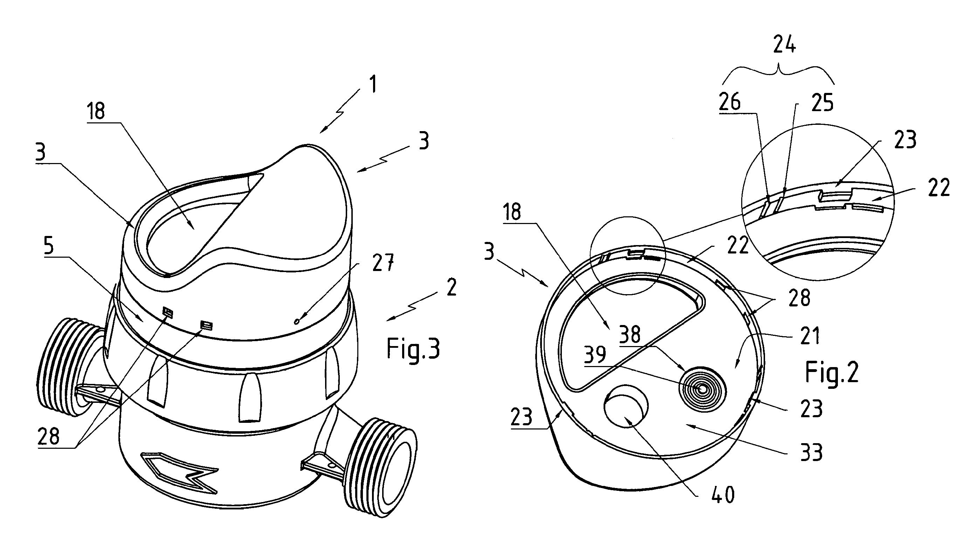

With reference to Figures 1 and 2, the capsule 3 of the electronic module is a sort of cap having a circular base and reversibly attachable to the second portion 5 of the body 2 of the meter 1. In particular, the capsule 3 is provided with a window 18 to allow the reading of the indicators and a housing 19 to contain the data detection, management and forwarding electronic module, and if necessary a power supply battery. A first face 20, turned toward the outside of the meter when in use, is thus divided into a windowed part and a closed part which is raised with respect to the plane of the window 18 (Figure 1). A second face 21, turned toward the body 2 of the meter when in use, also has a windowed part corresponding to the one of the first face 20 and a recessed part corresponding to the above-mentioned housing 19 (Figure 2).

In particular, as shown in Figure 2, from the second face 21 extends a circular border 22 comprising second coupling elements 23 of bayonet type suitable to cooperate with the above-mentioned first elements 15 formed on the body 2 of the meter 1 in order to have a reversible coupling of said capsule 3 on said body 2. Preferably, the second elements 23 are represented by a plurality of teeth distributed along said border, most preferably three equidistant teeth along the border 22.

Again with reference to Figure 2, in a counterclockwise direction and after the teeth 23 there are second safety elements 24 suitable to cooperate with said first safety elements 16 formed on the capsule 3. Preferably, the second safety elements 16 include at least one groove, more preferably a first groove 25 suitable to receive said first safety elements 24 and a second groove 26 suitable to engage said first elements against their accidental release, as described later. In particular, the second safety elements 24 are three equidistant elements, each formed by said pair of first and second grooves 25, 26.

The external wall of the capsule 2, as shown in Figure 3, is also provided with a first opening 27 that makes it possible to view from outside the lighting of a LED indicating the functioning of the electronic board contained in the capsule itself.

Second openings 28 are then prearranged so that, once the capsule 3 is applied on the body 2 of the meter, they allow the insertion of a sealing wire (not shown) that will engage the incision 17 formed on the capsule 10 of the body 2.

Inside the capsule 3, in the housing 19 shown in cross section in Figure 5, an electronic module 29 includes conventional elements such as a printed circuit board 30 for collecting, storing, managing and forwarding reading and control data of the state of the meter, as well as an optical component of the direct-light reading type (not shown). In addition, the housing 19 can preferably also contain a battery 32 to feed the module 29 and the optical component. Preferably, the module 29 may be of different commercially available types, such as for example modules with an integrated technology for radio data transmission, MBUS wire transmission, wire transmission with digital outputs, GSM radio transmission and the like.

Advantageously, the module 29 and the battery 32, if present, are insulated inside the capsule 3 by a cover 33 that closes the face 21 of the capsule 3 (Figures 2 and 5). The cover 33 may consist of a generally flat plate of transparent plastic, as shown in Figure 2, having a shape that reproduces the shape in plan view of the face 21 of the capsule 3. Preferably, the cover 33 includes a plurality of teeth 34 positioned along its peripheral border suitable to elastically engage corresponding seats 35 formed along the border 22 of the capsule 3 (Figure 6). To guarantee tightness against dust and moisture, a first gasket 36 is positioned in a suitable seat formed around said peripheral border of the cover 33, and a second gasket 37 that is in turn set in a suitable seat formed around the edge of the window 18 of the capsule 3.

Preferably, the cover 33 includes a flexible zone 38 provided with a push button 39 suitable to activate the electronic module 29 when the capsule 3 is applied on the body 2 of the meter 1 (Figure 2).

In addition, the cover 33 includes an aperture 40 of ovoid shape suitable to receive the seat 13 of the rotor of the direct-light device (Figure 2).

The assembling of the capsule 3 of the electronic module on the body 2 of the meter 1 according to the present invention requires, first of all, the positioning of the capsule 3, provided with all the necessary or desired components, devices and elements previously described, so that its second face 21 is turned toward the capsule 10. In particular, the capsule 3 is correctly oriented by matching the references of the second openings 28 with the incision 17 on the border 12 of the capsule 10.

In this position, the teeth 23 of the capsule 3 are aligned with the slots 15 on the border 12 of the capsule 10, while the first groove 25 of said border is aligned with the spline 16 of the capsule 3.

At this point, the capsule 3 of the electronic module is fitted onto the capsule 10 and the seat 13 of the reading device rotor engages the aperture 40.

It is now sufficient to turn the capsule 3 clockwise, as shown by the arrow of Figure 1A, so that the teeth 23 engage the horizontal portion of the slot 15 and the spline 16 passes from the first groove 25 to the second groove 26 and snaps in.

In this manner, the first engagement between the tooth and the slit locks the capsule 3 against axial movements, and the engagement of the spline with the groove locks the capsule 3 against rotational movements, while, thanks to the ovoid shape of the aperture 40, the seat 13 of the rotor positions itself correctly with respect to the optical reading devices. At the same time, the push button 39 on the cover 33 presses against an area of activation of the electronic module printed circuit board and activates the electronic module.

A sealing wire (not shown) may finally be threaded into one of said second openings 28 of the capsule 3 and out of the other opening so as to then apply on it a conventional sealing material. Alternatively, an anti-tampering seal may be formed by the application of an adhesive tape or a self-destructing label between the electronic module capsule 3 and the body 2 of the meter 1.

The meter 1 according to the present invention is thus ready to work correctly (Figure 3).

From what has been heretofore described, it is evident that the meter of the invention makes it possible to resolve the previously described drawbacks and to introduce numerous advantages.

Firstly, the capsule can be mounted in a simple, fast and safe manner on the body of the meter. As mentioned, the coupling has been planned to ensure a good tightness, a precise positioning of all the functional components, with particular reference to the rotor of the direct-light reading device, and the simple automatic activation of the electronic module.

In addition, it should be pointed out that the meter may also be bought without the capsule, or the electronic module, as it is already prearranged to receive the same capsule at a later moment. The same module can be mounted on different types of similarly prearranged meters.

Advantageously, there is no need to have complex fastening systems such as screws that are difficult to apply in narrow spaces where maintenance is difficult.

The push button that activates the printed circuit board can also work as anti-fraud alarm together with the application of the sealing wire or the self-destructing label.

It is evident that the meter 1 is also particularly versatile from the standpoint of its use, installation and interchangeability.

The particular configuration of the electronic module capsule 3 allows, moreover, the positioning of a crescent-shaped antenna (not shown) around the window 18 from the side opposite the housing 19 of the capsule 3. This makes it possible to have the battery positioned away from the antenna and therefore a better antenna performance.

The window 18 of the electronic module capsule 3 also makes it possible to read the numeric indicators indexes on the meter when the module is connected.

Changes or variations can be applied to the meter of the present invention within the area of expertise of a person skilled in the art, without departing from the scope of protection of the enclosed claims. For example, the shapes described above are not binding, and may be modified to suit particular requirements of space or preferred designs.

The materials may be chosen from among those commonly used in the field, such as plastic materials for the capsule 3, the capsule 10, the cover 33 and the components transmitting the flow of the fluid. Alternatively, the materials for some of said components may be metal materials, such as on the gearwheels and the geared shaft.

The number, the distribution along the respective borders and the shape of the first and second bayonet-joint elements may be varied according to specific preferences.

The bayonet joint between the capsule 3 of the electronic module and the body 2 of the meter may also be adapted for a reflected-light meter. In fact, it will be sufficient to modify the respective optical component on the body of the meter, while all the rest of the structure of the capsules 3 and 10 may remain substantially unchanged, and therefore the same advantages mentioned above may also be applied to said meter.

## Claims

1. Fluid meter (1) including a body (2) on which may be reversibly coupled a capsule (3) containing an electronic module (29) used to record, process and send data relative to the fluid being metered and to the state of the meter itself, **characterized in that** the body (2) and the capsule (3) are coupled by means of first (15) and second (23) elements of bayonet-joint type.

2. Meter (1) according to claim 1, in which said body (2) includes a first portion (4) and a second portion (5), the second portion (5) comprising a capsule (10) that includes a bottom portion (11), generally flat and disk-shaped, from the periphery of which extends a border (12) forming an annular band on whose external surface said first bayonet-joint elements (15) are arranged.

3. Meter (1) according to claim 1 or 2, in which said capsule (3) presents a first face (20), oriented toward the outside of the meter when the meter is in use, and a second face (21) turned toward said body (2) when in use, both the first face (20) and the second face (21) being crossed by one and the same window (18), said second face (21) including a circular border (22) provided with said second bayonet-type coupling elements (23).

4. Meter (1) according to claim 2 or 3, in which from the bottom (11) rises a cylindrical seat (13) suitable to receive a rotor of a direct-light reading device.

5. Meter (1) according to any one of claims 1 to 4, in which said first elements (14) include a plurality of slots (15) having generally an L shape, with a first portion extending vertically to cover substantially all the height of the border (12) and a second portion that extends at right angles to the first portion.

6. Meter (1) according to any one of claims 2 to 5, in which said border (12) of the lid (10) includes an area crossed by an incision (17) in the shape of an arc that extends toward the centre of the bottom (11) of the lid.

7. Meter (1) according to any one of claims 1 to 6, in which said second bayonet-type coupling elements (23) include a plurality of teeth.

8. Meter (1) according to any one of claims 1 to 7, including in addition first and second safety elements (16, 24) suitable to prevent the accidental release of the capsule (3) from the body (2) in a rotational sense.

9. Meter (1) according to claim 8, in which said first safety elements (16) include at least one spline (16) and said second elements (24) include at least one first groove (25) and a second groove (26).

10. Meter (1) according to any one of claims 3 to 9, in which said second face (21) of the capsule (3) is closed by a cover (33) for protecting said electronic module (29) including a plurality of teeth (34) positioned along its peripheral border and suitable to elastically engage corresponding seats (35) formed along the border (22) of the capsule (3).

11. Meter (1) according to claim 10, including a first gasket (36) positioned in a suitable seat formed around said peripheral border of the cover (33) and a second gasket (37) that is in turn set in a suitable seat formed around the window (18) of the capsule (3).

12. Meter (1) according to claim 11, in which said cover (33) includes a flexible zone (38) provided with a push button (39) suitable to activate the electronic module (29) when the capsule (3) is applied on the body (2) of the meter.

13. Meter (1) according to any one of claims 10 to 12, in which said cover (33) includes an aperture (40) of ovoid shape suitable to receive said seat (13) of the rotor of the direct-light device.

14. Meter (1) according to any one of claims 3 to 13, in which said border (12) of said capsule (10) includes an incision (17) and said border (22) of said capsule (3) includes two openings (28) suitable to receive a sealing wire to seal the capsule (3) to the body (2) of the meter.

15. Meter (1) according to any one of claims 1 to 14, in which said electronic module (29) includes modules with an integrated technology for radio data transmission, MBUS wire transmission, wire transmission with digital output, and GSM radio transmission.
